# EUROPEAN PATENT SPECIFICATION

(11) **EP 0 418 842 B1**
(45) Date of publication and mention of the grant of the patent: **25.01.1995**
(21) Application number: 90117980.4
(22) Date of filing: 19.09.1990
(51) Int. Cl.: F16J 9/00, F02F 5/00

(54) **Manufacturing procedure for a piston ring**
Verfahren zur Herstellung eines Kolbenrings
Méthode de fabrication d'un segment de piston

(30) Priority: 20.09.1989 JP 242347/89; 25.07.1990 JP 194736/90
(43) Date of publication of application: 27.03.1991
(73) Proprietor: MITSUBISHI JUKOGYO KABUSHIKI KAISHA, Tokyo (JP)
(72) Inventor: Kawanami, Shizuo, c/o Nagasai Technical Institute, Nagasaki, Nagasaki Pref. (JP); Kamito, Yoshimi, c/o Nagasai Technical Institute, Nagasaki, Nagasaki Pref. (JP); Kishikawa, Ryoji, c/o Nagasai Technical Institute, Nagasaki, Nagasaki Pref. (JP)
(74) Representative: Fuchs Mehler Weiss

(56) References cited:
- FR-A- 1 484 353
- FR-A- 2 430 286
- GB-A- 2 069 098
- GB-A- 2 079 790
- US-A- 3 153 542

## Description

### SPECIFICATION

### 1. TITLE OF THE INVENTION

### Procedure for manufacturing a piston ring

### 2. FIELD OF THE INVENTION AND RELATED ART STATEMENT

The present invention relates to a procedure for manufacturing a piston cylinder for use in an internal combustion engine such as diesel engines and the like.

The typical example of the traditional type piston cylinder is represented by several products such as a cast iron ring, a chromium-plated ring having a sliding surface finished with the chromium-plating, and a WC sprayed ring etc., having the sliding surface sprayed with the tungsten carbide.

Though the cast iron ring has been used for a long period so far, the cast iron ring is deficient in lacking desirable characteristics in wearing resistance. In contrast, the chromium-plated ring and the WC sprayed ring have been used lately in various fields, but they are also disadvantageous in several respects as described below.

That is, while a procedure for manufacturing the piston ring utilizing welding and spraying process is easy to undertake, but they cannot ensure a production of a piston ring with a sufficiently long service life, since its coating thickness is reduced. The coating thickness is generally limited up to 0.5 mm, since the coating would be peeled off, or removed off, should the thickness be thicker than the above. On the other hand, the limit wearing amount of the piston ring is said to be approximately 2 mm (4 mm in diameter), and therefore the plated layer or the sprayed layer must have a wearing resistance characteristic approximately four times more superior to that of the traditional cast iron piston in order to enable the limit thickness of 0.5 mm of the plated or sprayed piston ring to cover such limit wearing amount. As a result, the need has arisen to develope a material which has a wearing resistance characteristics eight times and twelve times superior to that of the traditional material in order to provide a service life two time and three times longer than those of the traditional material respectively. However, it is considered difficult to achieve such improved characteristics, when various performances requirements for the piston ring are taken into accounts.

French patent application FR-A-2 430 286 discloses a procedure for manufacturing a piston ring comprising steps of processing a groove circumferentially in the surface of a piston ring body material, filling a single or plurality of powders into said groove, applying an elevated temparature by means of a laser to said powder for causing the same to be sintered while simultaneously bonding the powder with said groove in the piston ring body material 1.

The drawback of this known procedure is that only wear resistent layers of a limited thickness can be produced, due to the fact that during the bonding and sintering process no pressure can be applied to the powder in the non-sintered state.

It is therefore an object of the present invention to improve said manufacturing procedure comprising the step of machining grooves into a piston body material so that pressure can be applied to the powder to be sintered, so that a piston ring is manufactured having a wearing resistent layer of a thickness which allows better wear and tear properties, by utilising a currently available high hardness material.

From US-A-3,153,542 there is known a procedure to manufacture bi-metal piston rings using a cylinder, consisting of a layered bi-metal combination comprising a core of low alloy steel and a welded-on overlay of cast iron, which is severed into piston rings. Although the core of alloy steel of such a piston ring is relatively tough and resiliant the piston ring yielded by this known procedure is not sufficiently wear resistent, since the overlay of cast iron is relatively soft.

It is therefore object of the present invention to provide a manufacturing procedure for a piston ring using a layered bi-metal combination cylinder which is severed into single piston rings, which allows use of a powder material, which is to be sintered and bonded to the core material to form the outer layer of material of the bi-metal combination cylinder, thereby providing an outer surface of a piston ring having a greater wear and tear resistence.

The solution of these objects is described as far as the first object is concerned by the characteristic portion of claim 1, as far as the second mentioned object is concerned, by the characteristic portion of claim 2.

The above and other objects and advantages of the invention will be more apparent from a perusal of the following specification.

To accomplish the above objects, an embodiment of the present invention is devised such that a plurality of grooves is formed circumferentially in the upper surface of the piston ring body material made of an elongated cylindrical steel material, the grooves having width smaller than that of the piston ring and depth deeper than 2 mm, whereas a thin tubular steel material having a length substantailly equal with that of the piston ring body portion is provided, and said grooves are filled with a single or various types powdery material. After the opposite ends of the body material and the tubular steel material are welded together, sintering of the powders are effected by applying an elevated temperature and pressure while at the same time bonding the material with the groove of the piston ring body. After the outer tubular material is cut off for removal, the body portion between adjacent grooves is severed, whereby producing the piston ring of the invention.

Another alternative embodiment of the invention is arranged such that the piston ring body portion made of elongated cylindrical steel material is provided with a tubular steel having a diameter larger than that of the piston ring by more than 4 mm, and one or more types of powder is/are filled in a space between the two members, and opposite ends of the body material and tubular steel material are welded together. Then, the above powdery material is sintered by applying an elevated temperature and pressure, while at the same time grasping the piston ring body, and after the outer tubular member is cut off for removal, different dual-layered members of are cut off into a ring-like configuration with a predetermined width, and whereby producing the piston ring.

Since the present invention permits the production of the wearing resistant piston ring in accordance with the procedures of the invention, it may produce a piston ring easily having a wearing resistance layer on its sliding surface made of high hardness material and of the thickness more than 2 mm, and thereby ensuring an extended life span.

Additionally, since any suitable material may be used to form the wearing resistant layer, as long as it is of a high hardness grade to permit it to be sintered at an elevated temperature and pressure, one can select a preferred material among a plurality of types of candidate materials, while also enabling one to select any suitable mixing ratio of such materials.

Furthermore, a plurality of grooves of 2 mm or more in depth and a width narrower than that of the piston ring is formed in the piston ring which is produced in accordance with the second procedure of the invention, and a piston ring body made of steel materials is present on opposite ends of the sliding surface of the piston ring. Thus, there is no chance for the angular portion on the sliding surface to be notched, even when any material which is used to sinter the wearing resistant layer lacks viscosity.

Besides, when the piston is made in accordance with the second procedure of the present invention, no grooves are required to be formed, and consequently such advantages may be derived as that a high hardness material may be used for the piston ring body and the powdery material may be inserted with ease.

Moreover, when the HIP (Hot Isostatic Pressing) equipment is utilized to sinter the material under an elevated temperature and pressure, any shape can be selected relatively freely for the bonding portion, which is preferable when sintering the material in a complicated configuration and bonding, while permitting to apply steps of sintering the high hardness powdery material and of bonding the material with the piston ring body portion simultaneously, because the HIP equipment serves to substantially elevate the atmospheric gas pressure into an isotropic level.

### 4. BRIEF DESCRIPTION OF THE DRAWINGS

Fig. 1 through Fig. 8 illustrate one embodiment of the present invention, wherein;
Fig. 1 is a perspective view of a piston ring body material;
Fig. 2 is an enlarged view illustrating the portion A of Fig. 1;
Fig. 3 is a view illustrating the HIP equipment while it operates to treat the material;
Fig. 4 is a view illustrating the HIP equipment while it operates to treat the material;
Fig. 5 is a view illustrating the piston which has been cut off in a ring-like configuration after the HIP equipment was operated to treat the material;
Fig. 6 is a perspective view of the piston ring
Fig. 7 is a cross-sectional view taken along a line VII - VII of Fig. 6;
Fig. 8 is a view comparing a performance of the present invention with a prior art;

Fig. 9 through Fig. 12 illustrate second embodiment of the invention, wherein;

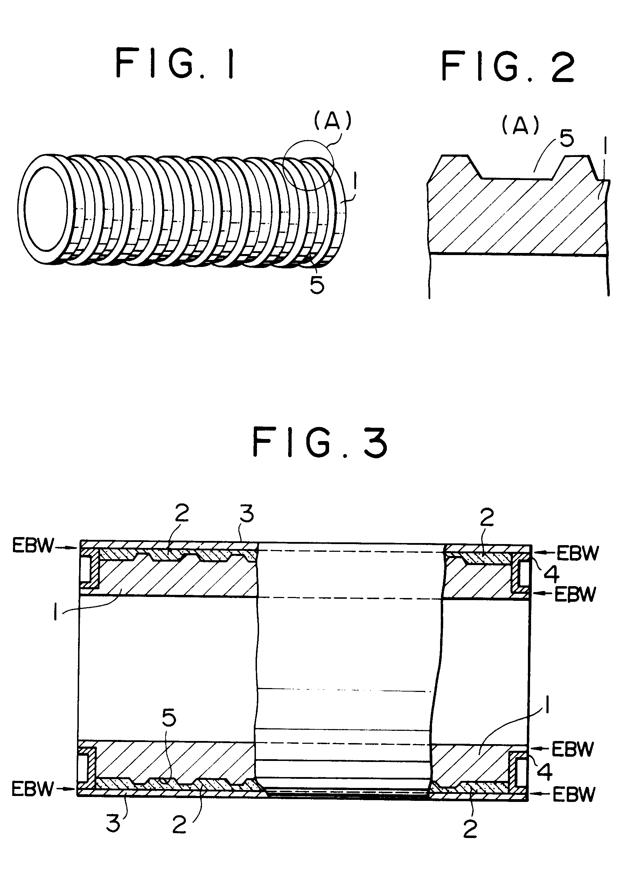

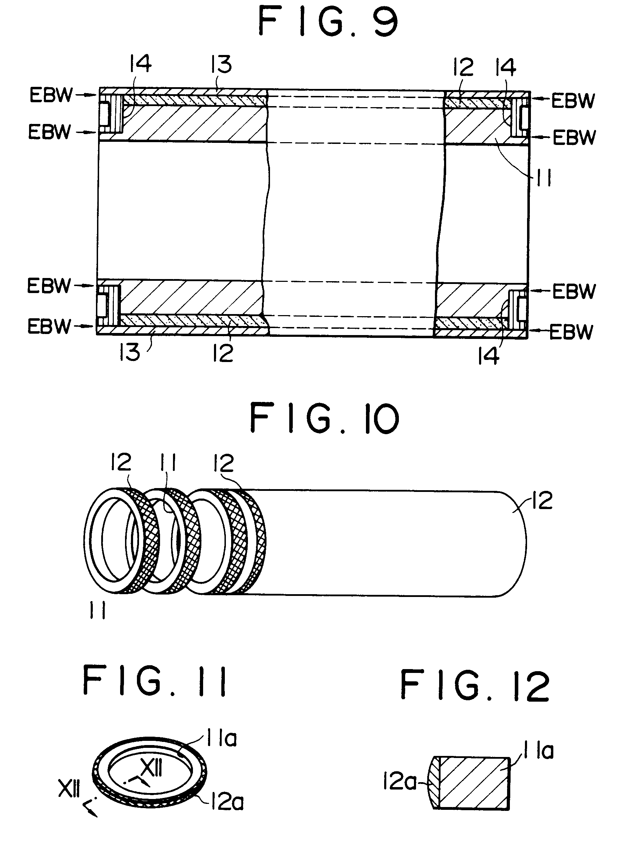

Fig. 9 is a view similar to Fig. 3;

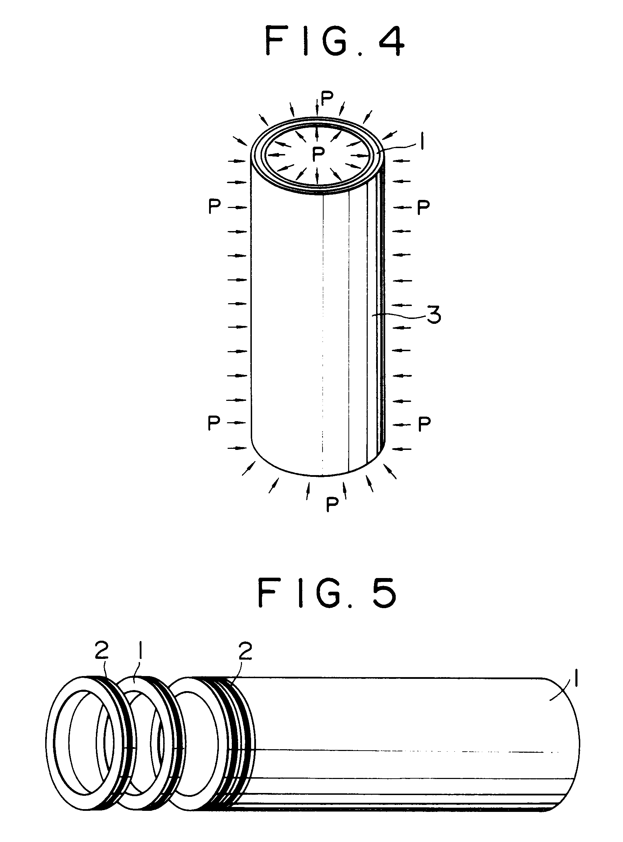

Fig. 10 is a view similar to Fig. 5;

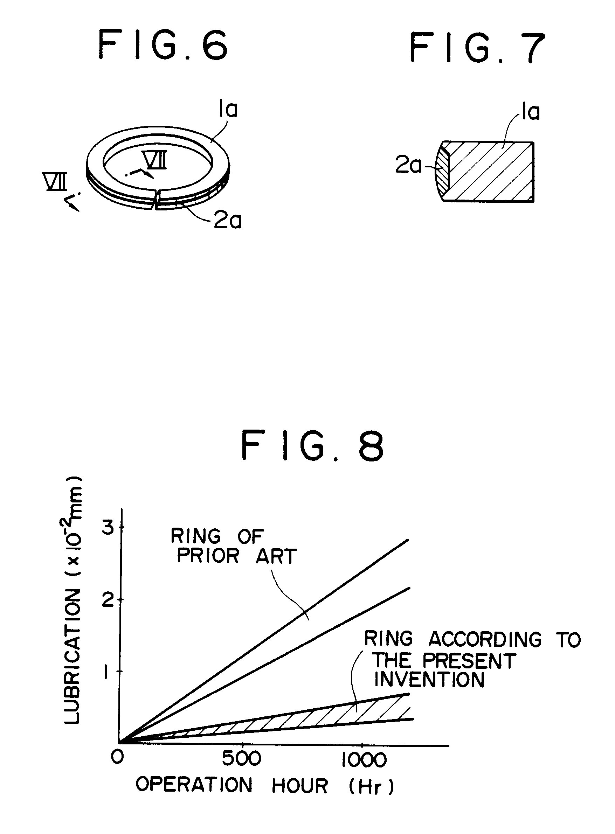

Fig. 11 is a view similar to Fig. 6;
Fig. 12 is a cross-sectional view taken along the line XII - XII of Fig. 11.

### 5. DETAILED DESCRIPTION OF PREFERRED EMBODIMENTS

One embodiment of the present invention will be described in details hereinbelow by way of example, making reference to accompanying drawing illustrating the piston ring body material 1, which has a plurality of grooves 5 defined in the surface of the cylinder. The body material 1 is required to have an increased viscosity and preferably is made of an alloy steel and carbon steel rather than the cast iron.

Fig. 2 is an enlarged cross-sectional view of the grooved portion A which has been machined in the surface of the Fig. 1, wherein the groove 5 is made smaller in width than the piston ring, and to have a depth of more than 2 mm in a trapezoidal shape. The shape of the grooves should not naturally be trapezoidal, but should avoid such a shape as may cause a stress concentration.

Fig. 3 is a cross-sectional view illustrating the assembling state of the HIP equipment in a pre-treatment step, wherein a powdery material 2 with an increased hardness such as carbide is filled into a space between the piston ring body material and a tubular steel material 3 of reduced thickness. Lateral opposite ends of the material are covered with a lid 4 in a vacuum atmosphere and then an electronic beam welding (EBW) is applied to entrap the high hardness material 2 in the vacuum. The hardness level of the material with an increased hardness is preferably in the range of 500 - 1,000 HV, and the selectability of the material is rather limited because the material must possess superior slidablity and resistance to hardenability plus the wearing resistance characteristics. Tungsten carbide (WC) or chromium carbide (Cr₃C₂) are prospective materials, but the mixture of other various compositions is available to use in the procedure of the present invention.

Fig. 4 is a view illustrating the HIP equipment while it is being operated, wherein the piston ring body material 1 is being treated with the HIP equipment under an elevated temperature and pressure. The pressure is approximately at 1,000 - 1,200 kgf/cm² , and the heating temperature is approximately at 1,000 - 1,200 °C. After the HIP equipment has been operated to treat the material, the tubular outer cylinder 3 of reduced thickness is removed by means of lathe, and then is severed into a ring-like configuration as illustrated in Fig. 5. The cutting is carried out in a position where the piston ring body material 1 occupies between adjacent very hard materials which have been welded. The piston ring which has thus been processed is further subject to the finishing process wherein its inner and outer diameters are finally defined, and then the piston ring flange is finally processed in the configuration as shown in Fig. 6. In Fig. 6, there are illustrated a piston ring body 1a and a very hard material 2a for forming the slidable surface. As described hereinbefore, the piston ring of the present invention is thus completed.

Fig. 7 is a cross-sectional view taken along the line VII -VII of Fig. 6, wherein the piston ring comprises a piston ring body material 1a of increased viscosity and the sliding surface formed of high hardness material. The high hardness material 2a is hard and relatively fragile, but other portion than the sliding surface is in contact with the piston ring body. The bonding strength of the material is maintained invariably by means of the HIP treating equipment, and it is not possible that the end portion of the piston ring may be removed during use. Fig. 8 shows that the wearing resistant piston ring of the present invention has an extremly increased durability. Though a single groove is shown in Fig. 5 through Fig. 7, such grooves may also be formed in a plural numbers.

Fig. 9 through 12 illustrates the second embodiment of the present invention. Fig. 9 is a cross-sectional view illustrating the assembling state of various members with the HIP equipment in a pre-treatment step. A powdery material 12 which is used to form a sliding portion of the piston ring is filled in a space between the piston ring body 11 and the steel outer tube 13 of reduced thickness. Lateral opposite ends are seal-welded by means of the lid 14 in a vacucum, and then the powdery material (wearing resistant material) 12 is sealed under a vacuum pressure. The powdery material 12 is preferably a material having hardness over 1,000 HV such as a carbide or a cobalt-alloy, but a mixture powder of the Mo powder having improved slidability and a powder with increased hardness is also effective, because the slidability and resistance to hardenability are required besides the wearing resistance characteristics.

Fig. 4 illustrates the manner in which the HIP equipment is operated to process the piston under an elevated temperature and pressure, which is carried out in a similar manner for the previous embodiment. Generally, the pressure used is at around 1,000 - 1,200 kgf/cm² and the maximum heating temperature of approximately 1,200 °C Max. However, more elevated temperature and pressure may be applicable for special purpose.

After the piston is processed by means of the HIP equipment, the lathe is utilized to remove the outer tube 13, and then is cut off in a ring-like configuration as illustrated in Fig. 10. Moreover, after the end flange trimming process is taken, the piston ring is completed with final dimensions in a ring-like configuration as illustrated in Fig. 11. Fig. 12 is a cross-sectional view taken along the line XII - XII of Fig. 11, wherein there are illustrated a piston ring body 11a and a wearing resistant material 12a which forms the slidable surface.

Fig. 12 is a view illustrating the high hardness material 12a bonded with the entire surface of the ring body material 11a. In this embodiment, however, a substantial viscosity may be provided if the piston ring is produced using an utmost care so as to sure a proper mixing ratio of the sintering alloy which is applied by means of the HIP equipment so that the material may be diffused in an increased density, unlike the prior art rings with latings or spraying applied. Thus, the piston may be produced which can be satisfactorily used in an actual application even when it is used under the conditions as set forth in the present embodiment.

## Claims

1. A procedure for manufacturing a piston ring, wherein said procedure comprises steps of processing at least one groove (5) circumferentially in the surface of a piston ring body material (1), filling a single or a plurality of powder(s) (2) said groove (5), and then applying an elevated temperature to said powder for causing the same to be sintered while simultaneously bonding the powder with said groove (5) in the piston ring body material (1),
characterized in that
the piston ring body (1) is made of an elongated cylindrical steel material, that said first step of processing at least one groove (5) in said material comprises furthermore processing of a plurality of grooves (5) having a depth greater than 2 mm, and that the procedure comprises furthermore the following steps:
arranging a thin tubular steel material (3) around the outer circumference of said body material (1), said tubular steel material (3) having the length substantially equal to that of said piston ring body material (1),
welding together opposite ends of said body material (1) and said tubular steel material (3), after said step of filling powder (2) in said grooves (5) has been completed,
and then applying said elevated temperature and a pressure to said powder (2) for causing said powder (2) to be sintered and bonded, cutting off said outer tubular material (3) for removal, and severing the body material (1) at a portion between adjacent groove (5).

2. A procedure for manufacturing a piston ring comprising the steps of
- arranging a tubular steel material (13) on a piston ring body material (11) made of elongated cylindrical steel material, said tubular steel material (13) having a diameter larger than that of said piston ring body material (11);
- welding opposite ends of said body material (11) and said tubular steel material (13) together;
- severing different dual layered members into a ring-like configuration having a predetermined width;
characterised in that after said arranging step filling a single or a plurality of powder(s) (12) in a space between said two members (11,13) is performed and in that after said welding step applying of an elevated temperature and pressure to said powder(s) (12) for causing the same to be sintered while simultaneously bonding the powder(s) (12) with the piston ring body material (11) and the cutting off of said outer tubular material (13) for removal are performed.

3. A procedure according to claim 1 or claim 2, characterized in that said powder(s) (2,12) is/are sintered alloy with superior wearing resistance and slidability with a thickness of more than 2 mm, and in that said piston ring body material (1,11) is a metal.

## Patentansprüche

1. Verfahren zur Herstellung eines Kolbenringes, wobei das Verfahren die Schritte umfaßt: Einarbeitung wenigstens einer Umfangsnut (5) in die Oberfläche eines Kolbenring-Gehäusematerials (1), Einfüllen eines einzigen oder mehrerer Pulver (2) in die Nut (5) und sodann Anlegen einer erhöhten Temperatur an das Pulver um dasselbe zur Sinterung zu veranlassen, während gleichzeitig das Pulver mit der Nut (5) in dem Kolbenring-Gehäusematerial (1) verbunden wird, dadurch gekennzeichnet, daß
das Kolbenring-Gehäusematerial (1) aus einem länglichen Stahlzylindermaterial besteht das der erste Schritt zur Einarbeitung wenigstens einer Nut (5) in das Material, ferner die Einarbeitung mehrerer Nuten (5) umfaßt, die eine Tiefe > 2mm haben, und daß das Verfahren ferner die folgenden Schritte umfaßt:
Anordnung eines dünnen, rohrförmigen Stahlmaterials (3) um den Außenumfang des Gehäusematerials (1), wobei das rohrförmige Stahlmaterial (3) im wesentlichen die gleiche Länge wie das KolbenringGehäusematerial (1) aufweist,
Zusammenschweißen der gegenüberliegenden Enden des Gehäusematerials (1) und des rohrförmigen Stahlmaterials (3), nachdem der Schritt des Einfüllens des Pulvers (2) in die Nut (5) vervollständigt worden ist, und sodann das Anlegen der erhöhten Temperatur und des Druckes an das Pulver, um das Pulver zum sintern und zum verbinden zu veranlassen, Abschneiden des äußeren rohrförmigen Materials (3) zwecks Entfernung und Abtrennung des Gehäusematerials an einer Stelle zwischen benachbarten Nuten (5).

2. Verfahren zur Herstellung eines Kolbenringes umfassend die Schritte:
- Anordnung eines rohrförmigen Stahlmaterials (13) auf einem Kolbenring-Gehäusematerial (11) aus einem länglichen zylindrischen Stahlmaterial, wobei das rohrförmige Stahlmaterial (13) einen Durchmesser größer als der des Kolbenring-Gehäusematerials (11) aufweist;
- Zusammenschweißen von gegenüberliegenden Enden des Gehäusematerials (11) und des rohrförmigen Stahlmaterials (13);
- Abtrennung verschiedener doppelt geschichteter Elemente in einer ringförmigen Konfiguration mit einer vorbestimmten Breite;
dadurch gekennzeichnet, daß nach dem Anordnungsschritt ein einziges oder mehrere Pulver (12) in einen Raum zwischen den zwei Elementen (11,13) gefüllt wird, daß nach dem Schweißschritt eine erhöhte Temperatur und Druck an das (die) Pulver (12) angelegt wird um dieses zur Sinterung zu veranlassen, während gleichzeitig das (die) Pulver (12) mit dem Kolbenring-Gehäusematerial (11) verbunden wird, und Abschneiden des äußeren rohrförmigen Materials (13) zwecks Entfernung.

3. Verfahren nach Anspruch 1 oder 2, dadurch gekennzeichnet, daß das (die) Pulver (12) eine gesinterte Legierung ist (sind), mit überlegenem Abnutzungswiderstand und Gleitfähigkeit und einer Dicke von mehr als 2mm und, daß das Kolbenring-Gehäusematerial (1,11) aus Metall besteht.

## Revendications

1. Procédé pour la fabrication d'un segment de piston, comprenant les étapes consistant à ménager au moins une gorge circonférentiellement dans la surface de la matière d'un corps à segments de piston (1), à remplir ladite gorge (5) au moyen d'une seule poudre ou d'une pluralité de poudres (2) et à appliquer ensuite une température élevée à ladite poudre pour provoquer un frittage et, simultanément, sa jonction à ladite gorge (5) ménagée dans la matière du corps à segments de piston (1), caractérisé en ce que le corps à segments de piston (1) est un élément oblong, cylindrique, en acier, que ladite première étape visant à former au moins une gorge (5) dans ladite matière comprend, en outre, la formation d'une pluralité de gorges (5) ayant une profondeur supérieure à 2 mm, et que le procédé comprend, de plus, les étapes suivantes :
disposition d'une fine épaisseur d'acier tubulaire (3) autour de la circonférence externe de ladite matière du corps (1), ladite fine épaisseur d'acier tubulaire (3) ayant une longueur sensiblement égale à celle de ladite matière du corps à segments de piston (1),
soudage l'une à l'autre des extrémités opposées de ladite matière du corps (1) et de ladite épaisseur d'acier tubulaire (3), au terme de ladite étape de remplissage des gorges (5) au moyen de la poudre (2), et
application ensuite de ladite température élevée et d'une pression à ladite poudre (2) pour provoquer le frittage et la jonction de ladite poudre (2), découpe pour l'enlèvement de l'épaisseur tubulaire extérieure (3), et sectionnement de la matière du corps (1) en un endroit situé entre des gorges (5) adjacentes.

2. Procédé pour la fabrication d'un segment de piston comprenant les étapes suivantes :
disposition d'une épaisseur d'acier tubulaire (13) sur la matière d'un corps à segments de piston (11) faite d'une épaisseur d'acier cylindrique oblongue, ladite épaisseur d'acier tubulaire (13) ayant un diamètre supérieur à celui de ladite matière du corps à segments de piston (11);
soudage réciproque des extrémités opposées de ladite matière du corps (11) et de ladite épaisseur d'acier tubulaire (13);
sectionnement de différents éléments à double couche en une configuration annulaire ayant une largeur prédéterminée;
caractérisé en ce qu'après ladite étape de disposition un remplissage par une seule poudre ou par une pluralité de poudres (12) d'un espace situé entre lesdits deux éléments (11, 13) est réalisé et qu'après ladite étape de soudage, l'application d'une température élevée et d'une pression à la ou les poudres (12) pour provoquer leur frittage et simultanément, leur jonction à la matière du corps à segments de piston (11) et le découpage pour l'enlèvement de ladite épaisseur tubulaire extérieure (13) sont réalisés.

3. Procédé selon la revendication 1 ou 2, caractérisé en ce que la ou les poudres (2, 12) est ou sont constituées d'un alliage fritté présentant une résistance à l'usure et une capacité de glissement supérieure avec une épaisseur de plus de 2 mm, et ladite matière du corps à segments de piston (1, 11) est un métal.
